(19)

Europäisches
Patentamt
European
Patent Office
Office européen
des brevets

(11)  **EP 2 464 037 A1**

(12)  **EUROPEAN PATENT APPLICATION**
published in accordance with Art. 153(4) EPC

(43) Date of publication:
**13.06.2012  Bulletin 2012/24**

(21) Application number: **10813339.8**

(22) Date of filing: **31.08.2010**

(51) Int Cl.:
**H04B 10/12** *(2006.01)*

(86) International application number:
**PCT/CN2010/076484**

(87) International publication number:
**WO 2011/026417 (10.03.2011 Gazette 2011/10)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority:  **04.09.2009  CN 200910091989**

(71) Applicant: **ZTE Corporation
Shenzhen, Guangdong 518057 (CN)**

(72) Inventors:
• **GU, Yuan
  Shenzhen
  Guangdong 518057 (CN)**
• **LUO, Bin
  Shenzhen
  Guangdong 518057 (CN)**

(74) Representative: **Schröer, Gernot H.
Meissner, Bolte & Partner GbR
Bankgasse 3
90402 Nürnberg (DE)**

(54)  **METHOD AND DEVICE FOR INDICATING CLIENT SIGNAL FAIL**

(57)    The present invention discloses a method for indicating client signal fail in an optical transport network, including: adding CSF indication bits to an Optical Channel Payload Unit k (OPUk) or/and OPUk-Xv multiframe to indicate whether a client signal is failed; detecting the CSF indication bits of a PSI in the received OPUk or/and OPUk-Xv multiframe, and when the number of continuously detected CSF indications exceeds a preset threshold, indicating to perform a link protection switch. The present invention also discloses an apparatus for implementing the above method. The present invention can avoid the case of APS fail due to the too long CSF time delay; the indication method is simple and the implementation is convenient; and a plurality of CSF indications are used in the multiframe, thus the indication is more flexible.

FIG. 2

EP 2 464 037 A1

**Description**

<u>Technical Field</u>

The present invention relates to a Client Signal Fail (CSF) indication technology in an Optical Transport Network (OTN), and particularly, to a method and apparatus for indicating client signal fail in an optical transport network.

<u>Background of the Related Art</u>

With the development of the OTN and the continue improvement of the OTN related standards, an idea is recently put forward that the CSF indication overhead needs to be added into the OTN. Wherein, the client signal fail refers to the fail appearing when client signals enter into the source-end OTN network.

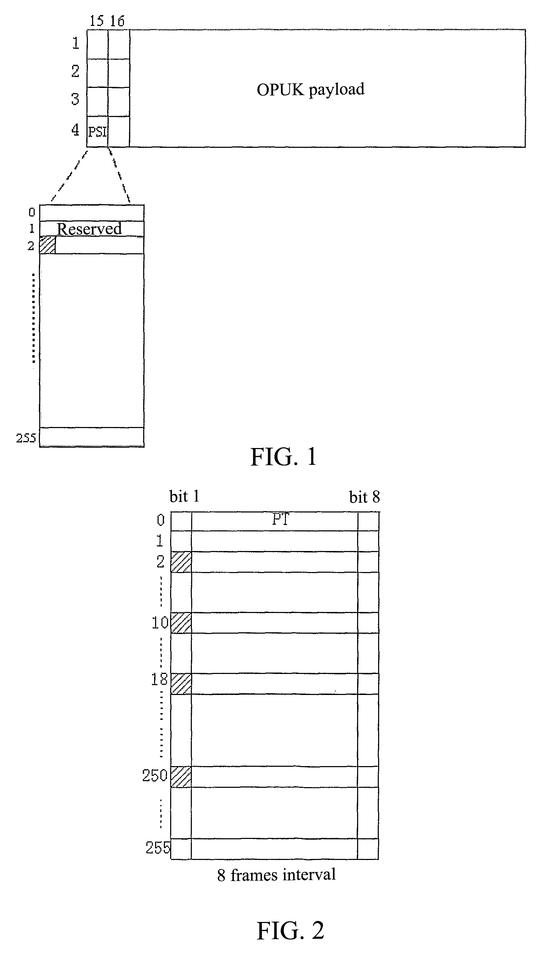

In the existing OTN network, the client signals are transmitted in the frame format of multiframe, and except for a few client signals, the destination-end OTN network management cannot detect the fail states when the source-side client signals enter into the OTN network. The destination-end OTN management function would like to know the states of the received client signals, but not all the client signals have the CSF indication, therefore, it is necessary to add the CSF indication in the OTN frame. FIG. 1 is a schematic diagram of a position of a client signal fail indication bit in the protocol, and as shown in FIG. 1, the ITU-T G.709/Y.1331 proposes adding the client signal fail indication bit in the position shown by oblique lines in the Optical Channel Payload Unit (OPU), that is, taking the PSI[2][1] as the CSF indication bit. When the source-end client signal is failed, the source end sets the PSI[2][1] of the OPUk (where, k indicates the rate type of the OPU frame) as 1 when sending the OPUk, otherwise, the source end set the PSI[2][1] as 0. Wherein, the "2" in the PSI[2][1] indicates a frame number of the OPUk frame where the Payload Structure Identifier (PSI) byte (8bit) is located. The PSI frame structure shown in FIG. 1 is the whole PSI byte of the OPUk multiframe (including 256 OPUk frames), and each PSI byte corresponds to one OPUk frame. The "1" indicates a bit serial number of the CSF indication bit in the PSI byte (8bit). Sfter the destination end receives the signal, it detects the PSI[2][1] bit in the OPUk multiframe structure, and applies different processing methods to different client signals according to the agreement.

The aforementioned solution of CSF indication has the following advantages: (1) occupying a few amount of OPUk overhead, only I bit; (2) conveniently indicating all client signal fails in the OPUk, and the implementation being simple. However, since the OPUk is a multiframe structure, each multiframe structure contains 256 OPUk frames. When only the PSI[2][1] bit is selected in the OPUk multiframe as the CSF overhead indication, each multiframe structure, that is, every 256 OPUk frames, has only one CSF indication. When a client signal is failed, the case of the client signal fail can only be detected after a period of 256 OPUk frames. The time delay of the current client signal fail detection is shown as Table 1:

Table 1

| ODU type | Maximum time delay |
|---|---|
| ODU0 | 25ms |
| ODU1 | 12.5ms |
| ODU2/ODU2e | 3.12ms/3.01ms |
| ODU3 | 0.77ms |
| ODU4 | 0.31ms |

In Table 1, for the ODUO, the maximum time delay required for detecting a client signal fail indication reaches 25ms, while at the destination end, it is generally determined that the source end has the client signal fail by continuously receiving 3-5 CSF indications. Therefore, the time needed by the destination end to determine that the source end has the client signal fail reaches 75 to 125ms. In the Automatic Protection Switch (APS), the time delay required by the protection switch is within 50ms, and in this case, the solution of only using the PSI[2][1] to indicate the CSF is difficult to meet the requirements.

<u>Content of the Invention</u>

In view of that, the main purpose of the present invention is to provide a method and apparatus for indicating client signal fail in an optical transport network, and to reduce the time delay of detecting the client signal fail by adding client signal fail indication bits in an OPU multiframe.

To achieve the aforementioned purpose, the technical solution of the present invention is accomplished as follows.

A method for indicating client signal fail in an optical transport network comprises:

adding client signal fail indication bits in an OPUk or/and OPUk-Xv multiframe to indicate whether a client signal is failed.

Preferably, said method further comprises:

detecting the client signal fail indication bits of a PSI in the received OPUk or/and OPUk-Xv multiframe, and when the number of continuously detected client signal fail indications exceeds a preset threshold, indicating to perform a link protection switch.

Preferably, the added client signal fail indication bits are located in PSI bytes in the OPUk or/and OPUk-Xv multiframe.

Preferably, the client signal fail indication bits are located in the PSI[x][y], wherein, x is a serial number of an OPUk or/and OPUk-Xv frame where the client signal fail indication bit is located in the OPUk or/and OPUk-Xv multiframe, and y is a bit number of the client signal fail indication bit in the PSI byte, and wherein, the serial number x starts from 0, a range of the maximum value of x is $2 \le x \le 255$, and $l \le y \le 8$.

Preferably, the client signal fail indication bits are evenly distributed in the OPUk or/and OPUk-Xv multiframe.

Preferably, the client signal fail indication bits are located in PSI[2+(n-1)×j][l], wherein, [2+(n-1)×j] is a serial number of an OPUk or/and OPUk-Xv frame where the client signal fail indication bit is located in the OPUk or/and OPUk-Xv multiframe, and [1] is the first bit of the client signal fail indication bit in the PSI byte, and wherein, n=l, 2, ..., 256/j, and j is an interval number between the OPUk or/and OPUk-Xv frames of two adjacent client signal fail indication bits.

Preferably, the selection of j meets a requirement of a protection switch on time delay.

Preferably, the j is a natural number exactly divisible by 256.

An apparatus for indicating client signal fail in an optical transport network comprises:

a setting unit, configured to add client signal fail indication bits in an Optical Channel Payload Unit (OPU)k or/and OPUk-Xv multiframe to indicate whether a client signal is failed.

Preferably, said apparatus also comprises:

a detection unit, configured to detect the client signal fail indication bits of a Payload Structure Identifier (PSI) in the received OPUk or/and OPUk-Xv multiframe;
a determination unit, configured to determine whether the number of continuously detected client signal fail indications exceeds a preset threshold, and if the number of continuously detected client signal fail indications exceeds the preset threshold, trigger the indication unit; and an indication unit, configured to indicate to perform a link protection switch.

Preferably, the client signal fail indication bits added by the setting unit are located in PSI bytes in the OPUk or/and OPUk-Xv multiframe.

Preferably, the client signal fail indication bits are located in PSI[x][y], wherein, x is a serial number of an OPUk or/and OPUk-Xv frame where the client signal fail indication bit is located in the OPUk or/and OPUk-Xv multiframe, and y is a bit number of the client signal fail indication bit in the PSI byte, and wherein, the serial number x starts from 0, a range of the maximum value of x is $2 \le x \le 255$, and $l \le y \le 8$.

Preferably, the client signal fail indication bits are evenly distributed in the OPUk or/and OPUk-Xv multiframe.

Preferably, the client signal fail indication bits are located in PSI[2+(n-1)×j][l], wherein, [2+(n-1)×j] is a serial number of an OPUk or/and OPUk-Xv frame where the client signal fail indication bit is located in the OPUk or/and OPUk-Xv multiframe, and [1] is the first bit of the client signal fail indication bit in the PSI byte, and wherein, n=l, 2, ..., 256/j, and j is an interval number between the OPUk or/and OPUk-Xv frames of two adjacent client signal fail indication bits.

Preferably, the selection of j meets a requirement of a protection switch on time delay.

Preferably, the j is a natural number exactly divisible by 256.

In the present invention, by adding client signal fail indication bits into the OPUk or/and OPUk-Xv multiframe to indicate whether a client signal is failed, when the client signal carried in the OPUk or/and OPUk-Xv multiframe is failed, the destination end can quickly realize the detection for the client signal fail, and the detection time delay is relatively small. Thus, when the destination end confirms that the client signal is failed, it can inform the source end in time to perform a protection switch, so as to make the time delay required by the protection switch achieve a preset requirement. The present invention can avoid the APS failure because of too long CSF time delay; the indication method is simple and the implementation is convenient; a plurality of CSF indications are used in the multiframe, thus the indication is more flexible.

Brief Description of Drawings

FIG. 1 is a schematic diagram of a position of a client signal fail indication bit in protocol;

FIG. 2 is a schematic diagram of CSF indications taking 8 frames as an interval in the present invention;

FIG. 3 is a schematic diagram of CSF indications taking 16 frames as an interval in the present invention; and

FIG. 4 is a structure diagram of an apparatus for indicating client signal fail in an optical transport network in accordance with the present invention.

Preferred Embodiments of the Present Invention

The basic idea of the present invention is: adding client signal fail indication bits into the OPUk or/and OPUk-Xv multiframe to indicate whether a client signal is failed, so that, when the client signal carried in the OPUk or/and OPUk-Xv multiframe is failed, the destination end can quickly realize the detection for the client signal fail, and the detection time delay is relatively small. Thus, when the destination end confirms that the client signal is failed, it can inform the source end in time to perform a protection switch, so as to make the time delay required by the protection switch achieve a preset requirement. The present invention can avoid the APS failure because of too long CSF time delay; the indication method is simple and the implementation is convenient; a plurality of CSF indications are used in the multiframe, thus the indication is more flexible.

To make the purpose, technical solution and advantages of the present invention more clear, the present invention will be further described in detail in combination with the specific embodiments and the accompanying drawings in the following.

The present invention is adding the client signal fail indication bits in the OPUk or/and OPUk-Xv multiframe to reduce the time delay needed for detecting the client signal fail by the destination end. Specifically, the client signal fail indication bits are located in PSI[x][y], wherein, x is the serial number of the OPUk or/and OPUk-Xv frame where the client signal fail indication bit is located in the OPUk or/and OPUk-Xv multiframe, and this serial number starts from 0, y is the bit number of the client signal fail indication bit in the PSI byte, wherein, the range of the maximum value of x is $2 \leq x \leq 255$, and $1 \leq y \leq 8$. That is, the client signal fail indication bit can be set in the PSI byte in each OPU frame, and the client signal fail indication bit can be set in any bit in the PSI byte. In the present invention, the case of processing the OPUk multiframe is the same as the method for processing the OPUk-Xv multiframe, and the present invention does not separately provide the method for processing the OPUk-Xv multiframe, and only takes the OPUk multiframe for example to illustrate.

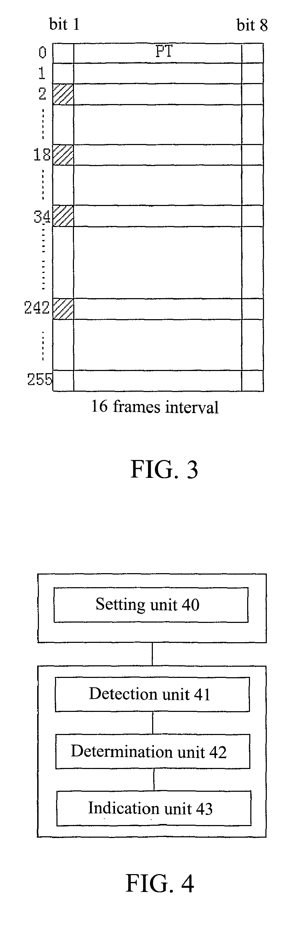

Taking the detection convenience into account, it is desirable that the client signal fail indication bits are evenly distributed in the OPUk multiframe. FIG. 2 is a schematic diagram of the CSF indication taking 8 frames as the interval in the present invention, and FIG. 3 is a schematic diagram of the CSF indication taking 16 frames as the interval in the present invention. As shown in FIG. 2 and FIG. 3, in the OPUO multiframe structure, one bit is set at every fixed number of OPUO frames for the CSF indication. In order to adapt to the OPUO multiframe structure, this CSF indication is selected to set in the overhead byte of the OPUO to realize the CSF indication by using the PSI overhead byte.

The positions of the CSF indication bits might be: PSI $[2+(n-1)\times j][1]$ ($n=1, 2, ..., 256/j$), wherein, j is the fixed frames interval number between two CSF indication bits, and the interval number is better to be a number exactly divisible by 256; and if the interval number cannot be exactly divisible by 256, 256/j should be selected by round down. The selection of j needs to meet the requirement of the protection switch on time delay, and in order to control the CSF time delay within a certain range, j can be selected as 8, 16, and so on.

When j is respectively selected as 8, 12 and 16, the positions of the CSF indication in the PSI are respectively:

$$\text{PSI}[2+(n-1)\times 8][1], \text{ where, } n=1, 2, ..., 32.$$

$$PSI[2+(n-1)\times12][1], \text{ where, } n = l, 2, …, 21.$$

$$PSI[2+(n-l)\times16][1], \text{ where, } n=l, 2, …, 16.$$

Table 2

| OPU Type | Frame time duration (Note) |
|----------|----------------------------|
| OPUO | 98.354 $\mu$s |
| OPU1 | 48.971 $\mu$s |
| OPU2 | 12.191 $\mu$s |
| OPU3 | 3.035 $\mu$s |
| OPU4 | 1.168 $\mu$s |

In the present invention, the selection of j must meet the requirement of the protection switch on time delay. As shown in Table 2, it shows the time duration of each frame in the OPUk frame given in the standards ITU-T G.709, and the APS time delay requirement is 50ms that the entire protection switch requires, so, the time delay of a plurality of detections for finally determining the client signal fail cannot exceed 10ms (or the operator/client has special requirements).

Taking the OPUO for example, the algorithm is: the time of the number of interval frames multiplying one frame of OPUO is 98.354$\mu$s, therefore, if the interval is 256 frames, the multiframe time duration is $256\times98.354\mu s\approx25$ms; in general, the client signal fail will be confirmed till 3-5 CSFs are detected, so 25msx3=75ms again, which obviously cannot meet the requirement of protection switch.

With the same algorithm method, it can be calculated out that:

if the interval is 8 frames, the delay is $8\times98.354\mu s\times3=2.36$ms; $8\times98.354\mu s\times5=3.93$ms;

if the interval is 12 frames, the delay is $12\times98.354\mu s\times3=3.54$ms; $8\times98.354\mu s\times5=5.90$ms;

if the interval is 16 frames, the delay is $16\times98.354\mu s\times3=4.72$ms; $16\times98.354\mu s\times5= 7.868$ms.

The aforementioned time is far less than 50ms, and adds the time duration needed to notify the switching device to switch, then the total time will not exceed 50ms, thus it can meet the corresponding switch time delay.

As shown in FIGs. 2 and 3, they are schematic diagrams of all the PSI bytes of the OPUO multiframe, wherein, from the PSI byte of the second OPUO frame, at the interval of every 8 or 16 OPUO frames, the first bit of the PSI byte is set as the CSF indication bit, and the oblique line parts in the figures are the positions of the CSF indication bits.

It should be illustrated that, the present invention only takes the OPUO multiframe for example to illustrate the CSF indication bits, the technical solution of the present invention is applicable to the case of the client signal fail indication of the OPUk in the same way.

Using such indication method can shorten the time delay for acquiring the client signal fail indication by the destination end. Table 3 shows the client signal fail of the OPUk and the CSF indication time delay when the j is selected as 8. Table 4 shows the client signal fail of the OPUk and the CSF indication time delay when the j is selected as 16. As shown in the Table 3 and Table 4:

Table 3

| ODU type | Maximum time delay |
|----------|--------------------|
| ODUO | 0.78ms |

(continued)

| ODU type | Maximum time delay |
|---|---|
| ODU1 | 0.39ms |
| ODU2/ODU2e | 0.10ms/0.09ms |
| ODU3 | 0.025ms |
| ODU4 | 0.01ms |

Table 4

| ODU type | Maximum time delay |
|---|---|
| ODUO | 1.57ms |
| ODU1 | 0.78ms |
| ODU2/ODU2e | 0.20ms/0.19ms |
| ODU3 | 0.05ms |
| ODU4 | 0.02ms |

Therefore, the destination end detects the client signal fail indication bits of the PSI in the received OPUk multiframe, and when the number of continuously detected client signal fail indications exceeds the preset threshold (such as 3 to 5), indicates to perform a link protection switch. From the time delay value shown in Table 3 and Table 4, it can be seen that, the maximum time delay value needed for detecting 3 to 5 continuous CSF indications is 3x1.57ms to 5x1.57ms, significantly less than the 50ms required by the system switch. Therefore, when determining that the client signal in the OPUk multiframe is failed, it is all right to indicate to perform the link protection switch.

FIG. 4 is a structure diagram of the apparatus for indicating the client signal fail in the optical transport network in accordance with the present invention, and as shown in FIG. 4, the apparatus for indicating the client signal fail in the optical transport network in accordance with the present invention comprises a setting unit 40, used to add client signal fail indication bits in the OPUk and/or OPUk-Xv multiframe to indicate whether a client signal is failed. The client signal fail indication bits added by the setting unit 40 are located in the payload structure identifier (PSI) bytes in the OPUk and/or OPUk-Xv multiframe. Wherein, the client signal fail indication bits are evenly distributed in the OPUk and/or OPUk-Xv multiframe. Specifically, the client signal fail indication bits are located in the PSI[x][y], wherein, x is the serial number of the OPUk and/or OPUk-Xv frame where the client signal fail indication bit is located in the OPUk and/or OPUk-Xv multiframe, and this serial number starts from 0; y is the bit number of the client signal fail indication bit in the PSI byte, wherein, the range of the maximum value of x is $2 \leq x \leq 255$, and $I \leq y \leq 8$. Further, the client signal fail indication bits are located in the PSI[2+(n-1)×j][l], wherein, [2+(n-1)×j] is the serial number of the OPUk and/or OPUk-Xv frame where the client signal fail indication bit is located in the OPUk and/or OPUk-Xv multiframe, and this serial number starts from 0; [1] is the first bit of the client signal fail indication bit in the PSI byte, wherein, n=l, 2, ..., 256/j, and j is the interval number between the OPUk and/or OPUk-Xv frames of two adjacent client signal fail indication bits.

As shown in FIG. 4, the apparatus for indicating the client signal fail in the optical transport network in accordance with the present invention also comprises a detection unit 41, a determination unit 42 and an indication unit 43, wherein, the detection unit 41 is used to detect the client signal fail indication bits of the PSI in the received OPUk and/or OPUk-Xv multiframe; the determination unit 42 is used to determine whether the number of continuously detected client signal fail indications exceeds the preset threshold, and if yes, trigger the indication unit 43; and the indication unit 43 is used to indicate to perform the link protection switch.

Those skilled in the art should understand that the apparatus for indicating the client signal fail in the optical transport network shown in FIG. 4 is designed for realizing the aforementioned method for indicating the client signal fail in the optical transport network, and the function of each processing unit in the apparatus shown in FIG. 4 can be understood by referring to the description of the aforementioned method, and can be achieved by programs running on a processor or by a specific logic circuit.

The above description is only the preferred embodiments of the present invention, and is not intended to limit the scope of the present invention.

**Claims**

1. A method for indicating client signal fail in an optical transport network, comprising:

   adding client signal fail indication bits in an Optical Channel Payload Unit (OPU)k or/and an OPUk-Xv multiframe to indicate whether a client signal is failed; wherein, k indicates a rate type of an OPU frame.

2. The method of claim 1, further comprising:

   detecting the client signal fail indication bits of a Payload Structure Identifier (PSI) in the received OPUk or/and OPUk-Xv multiframe, and when the number of continuously detected client signal fail indications exceeds a preset threshold, indicating to perform a link protection switch.

3. The method of claim 1 or 2, wherein, the added client signal fail indication bits are located in PSI bytes in the OPUk or/and OPUk-Xv multiframe.

4. The method of claim 3, wherein, the client signal fail indication bits are located in the PSI[x][y], wherein, x is a serial number of an OPUk or/and OPUk-Xv frame where the client signal fail indication bit is located in the OPUk or/and OPUk-Xv multiframe, and y is a bit number of the client signal fail indication bit in the PSI byte, and wherein, the serial number x starts from 0, a range of the maximum value of x is $2 \leq x \leq 255$, and $l \leq y \leq 8$.

5. The method of claim 3, wherein, the client signal fail indication bits are evenly distributed in the OPUk or/and OPUk-Xv multiframe.

6. The method of claim 5, wherein, the client signal fail indication bits are located in PSI[2+(n-1)×j][l], wherein, [2+(n-1)×j] is a serial number of an OPUk or/and OPUk-Xv frame where the client signal fail indication bit is located in the OPUk or/and OPUk-Xv multiframe, and [1] is the first bit of the client signal fail indication bit in the PSI byte, and wherein, n=l, 2, ..., 256/j, and j is an interval number between the OPUk or/and OPUk-Xv frames of two adjacent client signal fail indication bits.

7. The method of claim 6, wherein, the selection of j meets a requirement of a protection switch on time delay.

8. The method of claim 6, wherein, the j is a natural number exactly divisible by 256.

9. An apparatus for indicating client signal fail in an optical transport network, comprising:

   a setting unit, configured to add client signal fail indication bits in an Optical Channel Payload Unit (OPU)k or/and OPUk-Xv multiframe to indicate whether a client signal is failed.

10. The apparatus of claim 9, further comprising a detection unit, a determination unit and an indication unit; wherein:

    the detection unit is configured to detect the client signal fail indication bits of a Payload Structure Identifier (PSI) in the received OPUk or/and OPUk-Xv multiframe;
    the determination unit is configured to determine whether the number of continuously detected client signal fail indications exceeds a preset threshold, and if the number of continuously detected client signal fail indications exceeds the preset threshold,
    trigger the indication unit; and
    the indication unit is configured to indicate to perform a link protection switch.

11. The apparatus of claim 9 or 10, wherein, the client signal fail indication bits added by the setting unit are located in PSI bytes in the OPUk or/and OPUk-Xv multiframe.

12. The apparatus of claim 11, wherein, the client signal fail indication bits are located in PSI[x][y], wherein, x is a serial number of an OPUk or/and OPUk-Xv frame where the client signal fail indication bit is located in the OPUk or/and OPUk-Xv multiframe, and y is a bit number of the client signal fail indication bit in the PSI byte, and wherein, the serial number x starts from 0, a range of the maximum value of x is $2 \leq x \leq 255$, and $l \leq y \leq 8$.

13. The apparatus of claim 11, wherein, the client signal fail indication bits are evenly distributed in the OPUk or/and OPUk-Xv multiframe.

14. The apparatus of claim 13, wherein, the client signal fail indication bits are located in PSI[2+(n-1)×j][l], wherein, [2+(n-1)×j] is a serial number of an OPUk or/and OPUk-Xv frame where the client signal fail indication bit is located in the OPUk or/and OPUk-Xv multiframe, and [1] is the first bit of the client signal fail indication bit in the PSI byte, and wherein, n=l, 2, ..., 256/j, and j is an interval number between the OPUk or/and OPUk-Xv frames of two adjacent client signal fail indication bits.

15. The apparatus of claim 14, wherein, the selection of j meets a requirement of a protection switch on time delay.

16. The apparatus of claim 14, wherein, the j is a natural number exactly divisible by 256.

FIG. 1

8 frames interval

FIG. 2

bit 1                                          bit 8

| | PT | |
|---|---|---|
| 0 | | |
| 1 | | |
| 2 | | |
| ⋮ | | |
| 18 | | |
| ⋮ | | |
| 34 | | |
| ⋮ | | |
| 242 | | |
| ⋮ | | |
| 255 | | |

16 frames interval

# FIG. 3

Setting unit 40

Detection unit 41

Determination unit 42

Indication unit 43

# FIG. 4

<table>
<tr><td colspan="2"><strong>INTERNATIONAL SEARCH REPORT</strong></td><td>International application No.<br>PCT/CN2010/076484</td></tr>
</table>

**A. CLASSIFICATION OF SUBJECT MATTER**

H04B10/12 (2006.01) i

According to International Patent Classification (IPC) or to both national classification and IPC

**B. FIELDS SEARCHED**

Minimum documentation searched (classification system followed by classification symbols)

IPC: H04B,H04L,H04J,H04Q,H04W

Documentation searched other than minimum documentation to the extent that such documents are included in the fields searched

Electronic data base consulted during the international search (name of data base and, where practicable, search terms used)

CNPAT,CNKI,WPI,EPODOC: fail, fault, failure, indicat+, add, increas+, overhead, client, signal, optical, transport, network, OPU, OTN, optical w channel w payload

**C. DOCUMENTS CONSIDERED TO BE RELEVANT**

| Category* | Citation of document, with indication, where appropriate, of the relevant passages | Relevant to claim No. |
|---|---|---|
| X | ITU-T G.709/Y.1331, Interfaces for the optical transport network (OTN) Amendment 3; [online], 30 Apr. 2009 (30.04.2009), section 17.1-17.7, [retrieved on: 2010-11-11], Retrieved from the Internet: <URL:http://59.64.144.8/itut/product/..%5Crec%CG%5CT-REC-G.709-200904-P!Amd3!PDF-E.pdf> | 1-5, 9-13 |
| A | CN1734986A (HUAWEI TECHNOLOGIES CO.,LTD.) 15 Feb. 2006 (15.02.2006) the whole document | 1-16 |
| A | CN101291179A (HUAWEI TECHNOLOGIES CO.,LTD.) 22 Oct. 2008 (22.10.2008) the whole document | 1-16 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 Nov. 2010 (11.11.2010) | **02 Dec. 2010 (02.12.2010)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>**JIN,Jing**<br>Telephone No. (86-10)62413298 |

Form PCT/ISA /210 (second sheet) (July 2009)

## INTERNATIONAL SEARCH REPORT

| International application No. |
| --- |
| PCT/CN2010/076484 |

C (Continuation).      DOCUMENTS CONSIDERED TO BE RELEVANT

| Category* | Citation of document, with indication, where appropriate, of the relevant passages | Relevant to claim No. |
| --- | --- | --- |
| A | CN101374030A (HUAWEI TECHNOLOGIES CO.,LTD.) 25 Feb. 2009 (25.02.2009) the whole document | 1-16 |
| A | WO2008/101377A1 (HUAWEI TECHNOLOGIES CO.,LTD.) 28 Aug. 2008 (28.08.2008) the whole document | 1-16 |

Form PCT/ISA /210 (continuation of second sheet ) (July 2009)

## INTERNATIONAL SEARCH REPORT
### Information on patent family members

| | International application No. |
|---|---|
| | PCT/CN2010/076484 |

| Patent Documents referred in the Report | Publication Date | Patent Family | Publication Date |
|---|---|---|---|
| CN1734986A | 15.02.2006 | WO2006015549A1 | 16.02.2006 |
| | | EP1737147A1 | 27.12.2006 |
| | | US2007076769A1 | 05.04.2007 |
| | | EP2045934A1 | 08.04.2009 |
| | | DE602005013941E | 28.05.2009 |
| | | ES2323970T3 | 28.07.2009 |
| CN101291179A | 22.10.2008 | WO2008125060A1 | 23.10.2008 |
| | | EP2148476A1 | 27.01.2010 |
| | | INKOLNP200903965E | 19.02.2010 |
| | | US2010067905A1 | 18.03.2010 |
| CN101374030A | 25.02.2009 | WO2009026831A1 | 05.03.2009 |
| WO2008/101377A1 | 28.08.2008 | EP2071750A1 | 17.06.2009 |
| | | US2009263131A1 | 22.10.2009 |
| | | CN101627566A | 13.01.2010 |

Form PCT/ISA /210 (patent family annex) (July 2009)